# EUROPÄISCHE PATENTANMELDUNG

(11) **EP 0 539 889 A2**
(43) Veröffentlichungstag der Anmeldung: **05.05.1993**
(21) Anmeldenummer: 92118214.3
(22) Anmeldetag: 23.10.1992
(51) Int. Cl.: H02N 1/00, G02B 26/08

(54) **Mikromechanischer Aktor**

(30) Priorität: 30.10.1991 DE 4135833; 04.09.1992 DE 4229507
(71) Anmelder: Steinbichler, Hans, Dr., D-83115 Neubeuern (DE)
(72) Erfinder: Rauch, Manfred,Prof. Dr.-Ing. habil., O-9081 Chemnitz (DE); Markert, Joachim,Dr.-Ing., O- 9044 Chemnitz (DE); Kiehnscherf, Richard,Dr.-Ing., O9051 Chemnitz (DE)
(74) Vertreter: Zinnecker, Armin, Dipl.-Ing.

(57) **Zusammenfassung**

Damit ein mikromechanischer Aktor, insbesondere ein mikromechanischer 3-D-Aktor, mit nur einem bewegten Teil in der Lage ist, dreidimensionale Auslenkungen auszuführen, besitzt dieser Aktor einen Stator (2) und ein relativ zu diesem bewegliches Teil (1), das als Flachteil ausgestaltet sein kann und das vorzugsweise durch Federn (6) bzw. Federanordnungen mit dem Stator (2) verbunden ist.

## Beschreibung

Die Erfindung betrifft einen mikromechanischen Aktor, dessen beweglicher Teil vorzugsweise mittels elektrostatischer Kräfte positionierbar ist, vorzugsweise in drei Achsen. Der Aktor kann für Positionieraufgaben im Mikrometerbereich, z.B. für die Strahlablenkung oder die Unterbrechung eines Strahls, eingesetzt werden.

Anordnungen zur ein-, zwei- und dreidimensionalen Positionierung im Mikrometerbereich sind bereits in einer Vielzahl von Varianten bekannt. Sie können für Ausrüstungen und Geräte verwendet werden. Für jede einzelne Achse kann ein getrennter Antrieb vorhanden sein. Es sind ein- und zweidimensionale Postioniereinrichtungen bekannt, die auf mikromechanische Weise arbeiten. Die Antriebe können auf elektrostatischen, elektrodynamischen, piezoelektrischen oder anderen Effekten beruhen. Es ist auch möglich, verschiedene derartige Antriebe miteinander zu kombinieren.

Aus den Vorveröffentlichungen DE-OS 25 31 069, DE-OS 25 42 233 und DE-AS 25 57 814 sind Lösungen bekannt, bei denen zur zweidimensionalen Ablenkung eines Lichtstrahls zwei bewegliche Spiegel verwendet werden, die einzeln elektromagnetisch positioniert werden.

Bei den aus dem DE-AS 23 21 211 und EP 0 154 870 bekannten Vorrichtungen werden Spiegel piezoelektrisch angetrieben. Eine aus kristallinem Silicium geätzte Vorrichtung ist in der EP 0 040 302 beschrieben. Diese Vorrichtung besteht aus zwei jeweils nur in einer Achse beweglichen Spiegeln, die über einen dritten Spiegel für eine zweidimensionale Auslenkung genutzt werden. Nachteilig ist dabei die Teilung der Strahlablenkung und die zweifache Umlenkung des Strahles, die zu Positionierfehlern führen kann.

Eine ähnliche Einrichtung ist in der EP 005 970 beschrieben. Bei dieser Einrichtung bilden der Spiegel, die Federelemente und der Rahmen eine stoffliche Einheit, die in Kombination mit zwei um 90° versetzten Einzelspiegeln mit einem dritten Spiegel korrespondieren, so daß eine zweidimensionale Ablenkung erreicht wird.

In der DD-G08C/338875 ist eine mikromechanische Bewegungseinrichtung beschrieben, die nur aus einem bewegten Teil besteht und die es gestattet, zweidimensionale Ablenkungen zu erzielen. Eine zusätzliche Bewegung in einer dritten Dimension kann nur über ein zweites Element erfolgen.

Eine direkte dreidimensionale Strahlbeeinflussung ist bei allen genannten Anordnungen nicht möglich. Um eine derartige Bewegung zu realisieren, sind bei den vorbekannten Einrichtungen mindestens zwei bewegte Elemente erforderlich. Der Justageaufwand der Einzelelemente und der technologische Herstellungsaufwand sind dementsprechend hoch.

Aufgabe der Erfindung ist es, einen mikromechanischen Aktor, insbesondere einen mikromechanischen 3-D-Aktor, vorzuschlagen, der mit nur einem bewegten Teil in der Lage ist, dreidimensionale Auslenkungen auszuführen.

Erfindungsgemäß wird diese Aufgabe durch einen mikromechanischen Aktor bzw. durch einen mikromechanischen 3-D-Aktor nach den kennzeichnenden Merkmalen des Anspruchs 1 gelöst. Der mikromechanische Aktor weist einen Stator und ein relativ zu diesem bewegliches Teil auf.

Vorteilhafte Weiterbildungen der Erfindung sind in den Unteransprüchen beschrieben.

Durch die erfindungsgemäße Lösung wird ein mikromechanischer 3-D-Aktor geschaffen, der mit nur einem bewegten Teil in der Lage ist, eine dreidimensionale Auslenkung durchzuführen. Durch den Einsatz von einkristallinem Silicum und modernen Herstellungstechnologien der Mikromechanik ist der Aktor schnell und leicht herstellbar. Da der Aktor nur ein bewegtes Teil enthält, ist der technologische Herstellungsaufwand relativ gering.

Vorzugsweise ist das bewegliche Teil als Flachteil ausgestaltet.

Das bewegliche Teil kann auf der dem Stator abgewandten Seite mindestens eine strahlreflektierende Fläche besitzen.

Vorzugsweise besitzt das bewegliche Teil eine Kreuzform oder eine Sternform.

Die dem Stator zugewandte Seite des beweglichen Teils kann metallisiert sein. Vorzugsweise ist die dem Stator zugewandte Seite des beweglichen Teils ganzflächig metallisiert. Eine weitere vorteilhafte Weiterbildung ist dadurch gekennzeichnet, daß die dem Stator zugewandte Seite des beweglichen Teils kreuzförmig oder sternförmig metallisiert ist. Die erwähnten Maßnahmen können miteinander kombiniert werden. Beispielsweise ist es möglich, das bewegliche Teil so auszugestalten, daß es eine Kreuzform oder Sternform besitzt und die dem Stator zugewandte Seite des beweglichen Teils ganzflächig zu metallisieren, so daß im Endergebnis die dem Stator zugewandte Seite des beweglichen Teils kreuzförmig bzw. sternförmig metallisiert ist.

Eine weitere vorteilhafte Weiterbildung ist dadurch gekennzeichnet, daß das bewegliche Teil und /oder der Stator ansteuerbare Elektroden besitzt, so daß das bewegliche Teil durch elektrostatische Kräfte bewegbar ist. Besonders vorteilhaft ist es, wenn der Stator ansteuerbare Elektroden besitzt.

Die Elektroden können in einer Kreisfläche angeordnet sein. Sie können ferner in Sektoren und /oder in Segmente unterteilt sein. Vorteilhaft ist es, wenn die Elektroden in einer symmetrischen Form angeordnet sind.

Vorzugsweise sind die Elektroden wahlweise ansteuerbar.

Das bewegliche Teil kann durch Federn bzw. Federanordnungen mit dem Stator verbunden sein. Die Federn verlaufen vorzugsweise in der Ebene des beweglichen Teils bzw. des beweglichen Flachteils. Die Federn können als Flachfedern ausgebildet sein. Nach einer vorteilhaften Ausgestaltung sind vier Federn vorgesehen, die vorzusgsweise einen Winkelabstand voneinander aufweisen, vorzugsweise einen Winkelabstand von jeweils 90°.

Eine weitere vorteilhafte Weiterbildung ist dadurch gekennzeichnet, daß die Federn gleiche Rückstellkräfte und/oder gleiche Rückstellmomente in drei Teilrichtungen aufweisen, wobei die drei Teilrichtungen vorzugsweise senkrecht zueianander verlaufen.

Die Federn können mäanderförmig gestaltet sein.

Nach einer weiteren vorteilhaften Weiterbildung ist der Abstand zwischen dem beweglichen Teil und dem Stator veränderbar.

Das bewegliche Teil kann gegenüber dem Stator mittels einer Kugelfläche gelagert sein. Diese Kugelfläche kann durch eine Kugel realisiert sein; dann ist das bewegliche Flachteil gegenüber dem Stator mittels einer Kugel gelagert. Die Kugelfläche kann aber auch durch einen Zylinder mit Kugelkalotte realisiert sein; dann ist das bewegliche Teil gegenüber dem Stator mittels einem Zylinder mit Kugelkalotte gelagert. Der Zylinder mit Kugelkalotte kann nach einer weiteren vorteilhaften Weiterbildung relativ zum Stator bewegbar sein.

Vorteilhaft ist es, wenn das bewegliche Teil Durchbrüche aufweist. Die Durchbrüche im beweglichen Teil können mit Durchbrüchen im Stator korrespondieren.

Ausführungsbeispiele der Erfindung werden nachstehend anhand der beigefügten Zeichnung im einzelnen erläutert. In der Zeichnung zeigt
- Fig. 1: eine mikromechanischen 3-D-Aktor in einer perspektivischen Darstellung,
- Fig. 2a: eine Federanordnung,
- Fig. 2b: eine abgewandelte Federanordnung,
- Fig. 2c: eine weitere Abwandlung der Federanordnung,
- Fig. 3: die Lagerung des als Flachteils ausgestalteten beweglichen Teils mittels einer Kugel in einer Seitenansicht,
- Fig. 4: die Lagerung des als Flachteil ausgestalteten beweglichen Teils mittels einer Kugelkalotte,
- Fig. 5a: eine Elektrodenanordnung, bei der die Elektroden in Sektoren angeordnet sind und
- Fig. 5b: eine Elektrodenanordnung, bei der die Elektroden in Sektoren und Segmenten angeordnet sind.

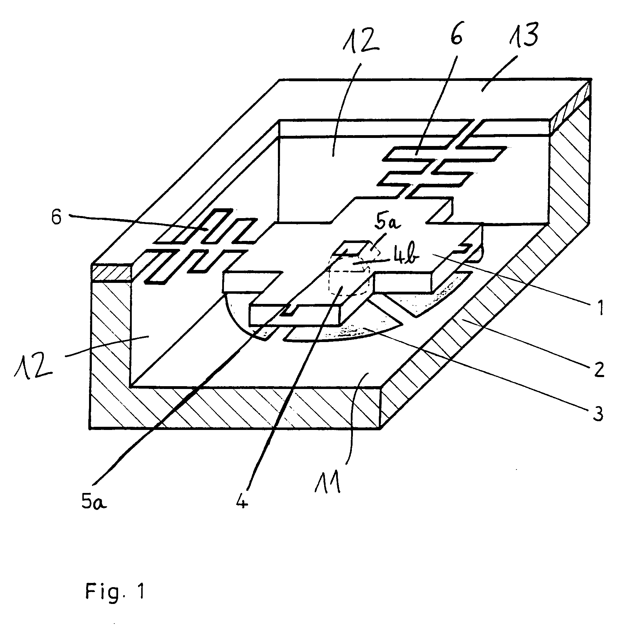

Der Aufbau des mikromechanischen 3-D-Aktors geht aus Fig. 1 hervor. Er besteht aus einem Stator 2, der in Fig. 1 teilweise geschnitten dargestellt ist. Der Stator 2 besteht aus einer horizontalen, ebenen Grundfläche 11 und vier im Rechteck angeordneten, vertikalen Seitenwänden 12, von denen in der Fig. 1 aus Gründen der einfachen zeichnerischen Darstellung nur zwei gezeigt sind. Über der Grundfläche 11 des Stators 2 ist ein bewegliches Teil 1 angeordnet, das als Flachteil ausgestaltet ist. In der Grundstellung befindet sich das Flachteil 1 im Abstand zur Grundfläche 11 des Stators 2. Es verläuft parallel zu dieser Grundfläche 11, und zwar im wesentlichen in der Ebene der oberen Enden der Seitenwände 12.

Das Flachteil 1 weist die geometrische Form eines Kreuzes auf. Es ist zentrisch, also in seiner Mitte, über dem Stator 2 mittels eines Zylinders 4 mit Kugelkalotte 4b in einem Hohlpyramidenstumpf 5a gelagert.

Zwischen dem Flachteil 1 und den ansteuerbaren Elektroden 3, die auf der Grundfläche 11 des Stators 2 vorgesehen sind, bilden sich elektrostatische Kräfte aus. Durch die geometrische Form des Flachteils 1, das auf der dem Stator 2 zugewandten Seite ganzflächig metallisiert ist, und die Gestaltung der Elektroden 3 auf der Grundfläche 11 des Stators 2 werden elektrostatische Kräfte erzeugt, die eine dreidimensionale Bewegung des Flachteils 1 ermöglichen.

Das Flachteil 1 wird mittels spezieller Federanordnungen 6 über dem Stator 2 bzw. dessen Grundfläche 11 gehalten. Es wird nach einer Auslenkung durch die Federn 6 wieder in die in Fig. 1 gezeigte Ausgangslage zurückgestellt. Die Federanordnungen 6 gewährleisten durch ihre geometrische Gestaltung gleiche Rückstellkräfte in allen drei Richtungen. Die Federanordnungen sind derart ausgebildet, daß die Rückstellkräfte in allen drei Raumrichtungen (senkrecht zur Grundfläche 11 des Stators 2 und senkrecht zu den Seitenwänden 12 des Stators 2) jeweils gleich groß sind.

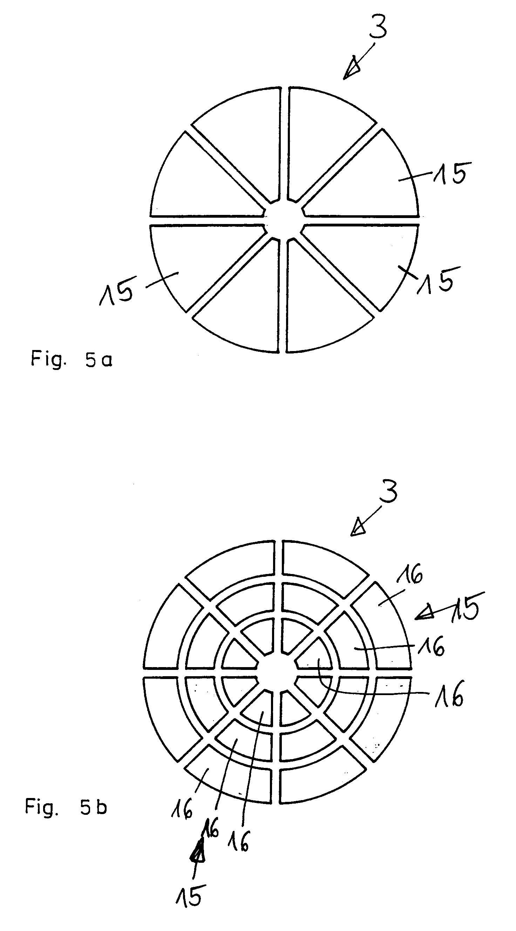

Der Abstand zwischen dem Flachteil 1 und dem Stator 2 bzw. dessen Grundfläche 11 wird durch die Anordnung des Zylinders 4 mit Kugelkalotte 4b in dem Hohlpyramidenstumpf 5a eingestellt. Diese Einstellung erfolgt über die Größe des Hohlpyramidenstumpfes 5a im Verhältnis zum Durchmesser der Kugelkalotte 4b (siehe auch Fig. 4).

Die Oberseite des beweglichen Flachteils 1 ist mit einer oder mehreren strahlreflektierenden Flächen, die einen hohen Reflexionsgrad aufweisen, metallisiert, um z.B. eine Laserstrahlablenkung zu erzielen. Das Flachteil 1 und/oder der Stator 2 können Durchbrüche beliebiger geometrischer Form und Anzahl aufweisen, die miteinander korrespondieren und die durch die Verdrehung des Flachteils 1 gegenüber dem Stator 2 eine Unterbrechung eines auftreffende Strahls realisieren.

Das bewegliche Flachteil 1 mit den Federanordnungen 6 und dem Stator 2 können technologisch aus einem einzigen Teil gefertigt werden. Eine Trennung in zwei Teile ist aber auch möglich, beispielsweise in Flachteil 1 und Federanordnungen 6 mit Rahmen 13 einerseits und Stator 2 andererseits. Der Rahmen 13 bildet den oberen Abschluß der Seitenwände 12 des Stators 2. Die beiden Teile (Flachteil 1 mit Federanordnungen 6 und Rahmen 13 einerseits sowie Stator 2 andererseits) müssen zueinander justiert und fixiert werden.

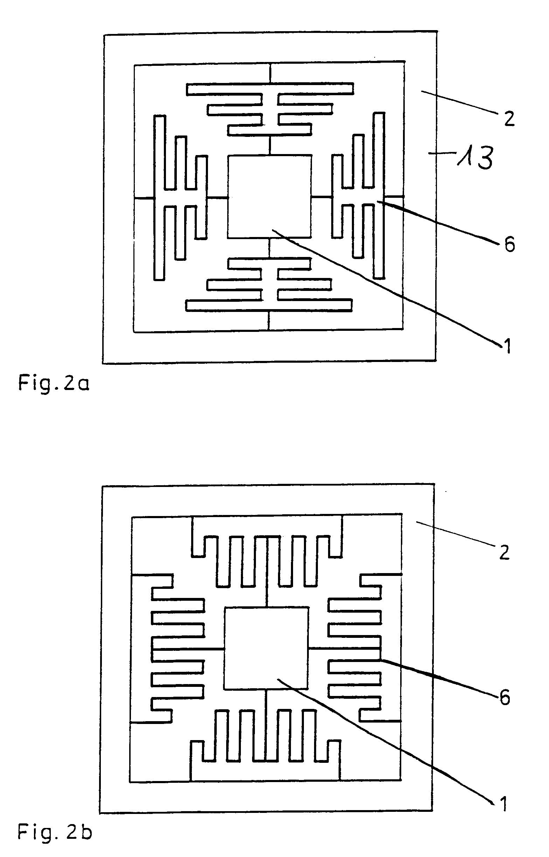

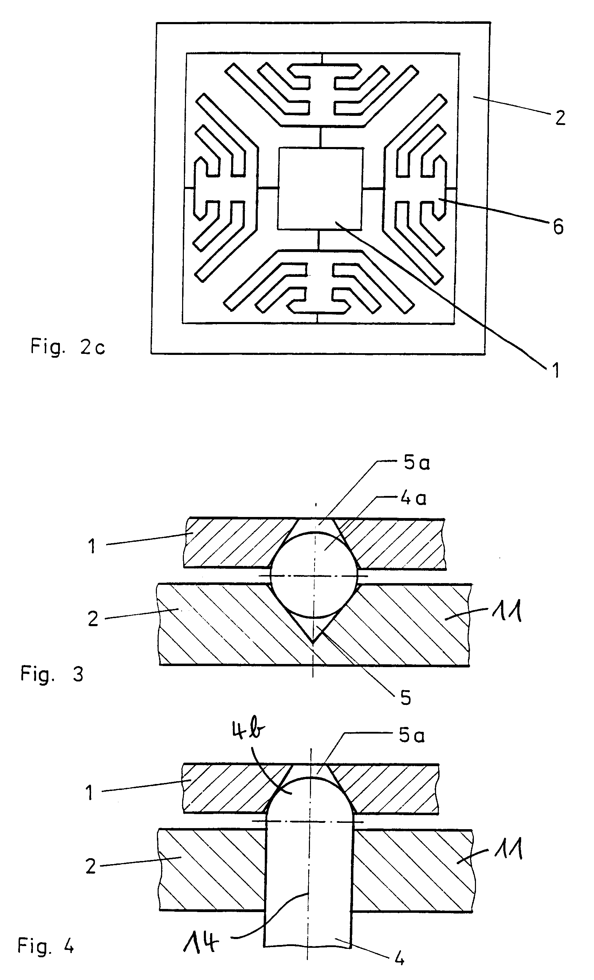

Die Figuren 2a, 2b und 2c zeigen spezielle mäanderförmige Federanordnungen 6, die durch ihre geometrische Gestaltung gleiche Rückstellkräfte in allen Richtungen aufweisen. Die Federn 6 sind auf der einen Seite am Flachteil 1 und auf der anderen Seite am Stator 2 bzw. an einem Rahmen 13 befestigt.

Die Federn 6 der Figur 2a verlaufen mäanderförmig von dem Stator 2 bzw. dem Rahmen 13 zu dem Flachteil 1. Die Länge der die Mäanderform bildenden Rechtecke nimmt von dem Stator 2 zu dem Flachteil 1 hin (also von außen nach innen) zu. Ferner sind die Federn zu einer von der Mitte des Flachteils 1 nach außen verlaufenden Linie symetrisch.

Bei der in Figur 2b gezeigten Gestaltung verlaufen die Mäander der Federn 6 parallel zu jeweils einer Seite des Stators 2 bzw. des Rahmens 13. Die den Mäander bildenden Rechtecke sind jeweils gleich groß. Lediglich die beiden äußersten Rechtecke sind kleiner ausgestaltet. Auch die Federn 6 nach Figur 2b sind symmetrisch zu einer von der Mitte des Flachteils 1 zu der Mitte der zugehörigen Seitenfläche des Stators 2 verlaufenden Linie ausgebildet.

Die Figur 2c zeigt eine Abwandlung der in Figur 2a dargestellten Federanordnungen 6. Hier sind die äußeren, also näher an dem Stator 2 liegenden Rechtecke der Mäanderform kürzer als die innen, also in der Nähe des Flachteils 1 liegenden Rechtecke. Die Länge der Rechtecke nimmt also von innen nach außen ab. Ferner sind die Rechtecke - außer dem äußersten, dem Stator 2 am nächsten liegenden Rechteck- um einen Winkel von etwa 45° abgeknickt. Auch die Federn 6 nach Figur 2c sind symmetrisch zu einer von der Mitte des Flachteils 1 zu der Mitte der zugehörigen Seite des Stators 2 verlaufenden Linie ausgebildet.

Die Figur 3 zeigt die Lagerung des Flachteils 1 mittels einer Kugel 4a in einer Hohlpyramide 5 des Stators 2 bzw. der Grundfläche 11 des Stators 2 und in einem Hohlpyramidenstumpf 5a in dem Flachteil 1. Die Lagerstellen im Flachteil 1 und im dem Stator 2 können als Hohlpyramide 5 oder als Hohlpyramidenstumpf 5a ausgebildet sein. Der Abstand zwischen Flachteil 1 und Stator 2 läßt sich über das Verhältnis von Kugeldurchmesser und Pyramidengröße einstellen.

In Figur 4 ist eine andere Form der Lagerung des Flachteils 1 gegenüber dem Stator 2 bzw. dessen Grundfläche 11 gezeigt. Ein Zylinder 4, der sich im Stator 2 befindet und der die Grundfläche 11 des Stators 2 durchsetzt, weist an seinem oberen Ende eine Kugelkalotte 4b auf. Das Flachteil 1 lagert mit der Innenfläche eines Hohlpyramidenstumpfs 5a auf der Oberfläche der Kugelkalotte 4b. Der Abstand zwischen Flachteil 1 und Stator 2 kann einerseits - wie in Figur 3 - über das Verhältnis des Durchmessers der Kugelkalotte 4b und die Größe des Hohlpyramidenstumpfs 5a eingestellt werden. Andererseits ist eine Einstellung auch über eine Verschiebung des Zylinders 4 entlang seiner Längsachse 14 in dem Stator 2 möglich.

Die Figur 5a zeigt eine Elektrode 3 in einer Anordnung, die aus mehreren Sektoren 15 besteht. Die Elektrode 3 befindet sich in der aus Figur 1 ersichtlichen Weise auf der Grundfläche 11 des Stators 2. Im Zusammenspiel mit dem kreuzförmigen Flachteil 1 gemäß Figur 1 oder mit einer sternförmigen Geometrie des Flachteils 1 können elektrostatische Kräfte erzeugt werden, wenn die Elektroden 3 bzw. die Sektoren 15 der Elektrode 3 selektiv angesteuert werden. Ein gleicher Krafteffekt läßt sich durch eine Elektrodenanordnung auf der dem Stator 2 zugewandten Seite des Flachteils 1 erzielen, die mit den Elektroden 3 auf dem Stator 2 korrespondiert.

In der aus Figur 5b ersichtlichen Weise können die Sektoren 15 in einzelne Segmente 16 unterteilt werden. Damit läßt sich eine quasidigitale Ansteuerung des Flachteils 1 realisieren.

Aufgrund der elektrostatischen Kräfte zwischen Flachteil (1) und Stator (2) kommt es zu einer Lageänderung des Flachteils (1), die eine Kippbewegung in zwei Richtungen und/oder eine Drehbewegung sein kann. Im Endergebnis kann damit das Flachteil (1) in allen drei Raumrichtungen bewegt werden. Die Lageänderung des Flachteils (1) führt zu einer Veränderung der Kapazität zwischen Flachteil (1) und Stator (2), die gemessen und ihrerseits einer Weiterverarbeitung, beispielweise einer Regelung, zugeführt werden kann.

Die auf dem Stator (2) bzw. dessen Grundfläche (11) vorhandenen Elektroden (3) bzw. (15), (16) können wahlweise angesteuert werden. In den in den Figuren (1), (5a) und (5b) gezeigten Ausführungsformen sind die Elektroden in einer Kreisfläche angeordnet. Sie sind ferner in einer symmetrischen Form angeordnet.

Die Federn (6) verlaufen in der Ebene des beweglichen Flachteils (1). Sie sind als Flachfedern ausgebildet. In der Ausführungsform gemäß Figur (1) sind vier Federn vorgesehen, die einen Winkelabstand von jeweils 90° voneinander aufweisen.

## Patentansprüche

1. Mikromechanischer Aktor,
gekennzeichnet durch,
einen Stator (2) und ein relativ zu diesem bewegliches Teil (1).

2. Mikromechanischer Aktor nach Anspruch 1, dadurch gekennzeichnet, daß das bewegliche Teil als Flachteil (1) ausgestaltet ist.

3. Mikromechanischer Aktor nach Anspruch 1 oder 2, dadurch gekennzeichnet, daß das bewegliche Teil (1) auf der dem Stator (2) abgewandten Seite mindestens eine strahlreflektierende Fläche besitzt.

4. Mikromechanischer Aktor nach einem der vorhergehenden Ansprüche, dadurch gekennzeichnet, daß das bewegliche Teil (1) eine Kreuz- oder Sternform besitzt.

5. Mikromechanischer Aktor nach einem der vorhergehenden Ansprüche, dadurch gekennzeichnet, daß die dem Stator (2) zugewandte Seite des beweglichen Teils (1) metallisiert, vorzugsweise ganzflächig metallisiert ist.

6. Mikromechanischer Aktor nach einem der vorhergehenden Ansprüche, dadurch gekennzeichnet, daß die dem Stator (2) zugewandte Seite des beweglichen Teils (1) kreuz- oder sternförmig metallisiert ist.

7. Mikromechanischer Aktor nach einem der vorhergehenden Ansprüche, dadurch gekennzeichnet, daß das bewegliche Teil (1) und/oder der Stator (2) ansteuerbare Elektroden (3) besitzt, so daß das bewegliche Teil (1) durch elektrostatische Kräfte bewegbar ist.

8. Mikromechanischer Aktor nach Anspruch 7, dadurch gekennzeichnet, daß der Stator (2) ansteuerbare Elektroden (3) besitzt.

9. Mikromechanischer Aktor nach Anspruch 7 oder 8, dadurch gekennzeichnet, daß die Elektroden in einer Kreisfläche angeordnet sind.

10. Mikromechanischer Aktor nach einem der Ansprüche 7 bis 9, dadurch gekennzeichnet, daß die Elektroden (3) in Sektoren (15) unterteilt sind.

11. Mikromechanischer Aktor nach einem der Ansprüche 7 bis 10, dadurch gekennzeichnet, daß die Elektroden (3) in Segmente (16) unterteilt sind.

12. Mikromechanischer Aktor nach einem der Ansprüche 7 bis 11, dadurch gekennzeichnet, daß die Elektroden in einer symmetrischen Form angeordnet sind.

13. Mikromechanischer Aktor nach einem der Ansprüche 7 bis 12, dadurch gekennzeichnet, daß die Elektroden wahlweise ansteuerbar sind.

14. Mikromechanischer Aktor nach einem der vorhergehenden Ansprüche, dadurch gekennzeichnet, daß das bewegliche Teil (1) durch Federn (6) bzw. Federanordnungen mit dem Stator (2) verbunden ist.

15. Mikromechanischer Aktor nach Anspruch 14, dadurch gekennzeichnet, daß die Federn (6) in der Ebene des beweglichen Teils (1) bzw. des beweglichen Flachteils verlaufen.

16. Mikromechanischer Aktor nach Anspruch 14 oder 15, dadurch gekennzeichnet, daß die Federn (6) als Flachfedern ausgebildet sind.

17. Mikromechanischer Aktor nach einem der Ansprüche 14 bis 16, dadurch gekennzeichnet, daß vier Federn vorgesehen sind, die vorzugsweise einen Winkelabstand von 90° voneinander aufweisen.

18. Mikromechanischer Aktor nach einem der Ansprüche 14 bis 17, dadurch gekennzeichnet, daß die Federn (6) gleiche Rückstellkräfte und/oder gleiche Rückstellmomente in drei Teilrichtungen aufweisen, wobei die drei Teilrichtungen vorzugsweise senkrecht zueinander verlaufen.

19. Mikromechanischer Aktor nach einem der Ansprüche 14 bis 18, dadurch gekennzeichnet, daß die Federn (6) mäanderförmig ge-staltet sind.

20. Mikromechanischer Aktor nach einem der vorhergehenden Ansprüche, dadurch gekennzeichnet, daß der Abstand zwischen dem beweglichen Teil (1) und dem Stator (2) veränderbar ist.

21. Mikromechanischer Aktor nach einem der vorhergehenden Ansprüche, dadurch gekennzeichnet, daß das bewegliche Teil (1) gegenüber dem Stator (2) mittels einer Kugelfläche (4a,4b) gelagert ist.

22. Mikromechanischer Aktor nach Anspruch 21, dadurch gekennzeichnet, daß das bewegliche Flachteil (1) gegenüber dem Stator (2) mittels einer Kugel (4a) gelagert ist.

23. Mikromechanischer Aktor nach Anspruch 21, dadurch gekennzeichnet, daß das bewegliche Teil (1) gegenüber dem Stator mittels einem Zylinder (4) mit Kugelkalotte (4b) gelagert ist.

24. Mikromechanischer Aktor nach Anspruch 23, dadurch gekennzeichnet, daß der Zylinder (4) mit Kugelkalotte (4b) relativ zum Stator (2) bewegbar ist.

25. Mikromechanischer Aktor nach einem der vorhergehenden Ansprüche, dadurch gekennzeichnet, daß das bewegliche Teil (1) Durchbrüche aufweist.

26. Mikromechanischer Aktor nach Anspruch 25, dadurch gekennzeichnet, daß die Durchbrüche im beweglichen Teil (1) mit Durchbrüchen im Stator (2) korrespondieren.
